# EUROPEAN PATENT APPLICATION

(11) **EP 2 452 867 A1**
(43) Date of publication of application: **16.05.2012**
(21) Application number: 10796869.5
(22) Date of filing: 22.06.2010
(51) Int. Cl.: B63B 25/16, B63H 21/17, B63H 21/38, B63J 3/04, F01K 25/10

(54) **GAS-FIRED SUPERCONDUCTIVE ELECTRICALLY PROPELLED SHIP**

(30) Priority: 06.07.2009 JP 2009159649
(71) Applicant: IHI Marine United Inc., Tokyo 108-0022 (JP)
(72) Inventor: TAKAHIRA, Tomoaki, Tokyo 108-0022 (JP); KIDA, Takayuki, Tokyo 108-0022 (JP)
(74) Representative: Köhler, Walter
(86) International application number: PCT/JP2010/004135
(87) International publication number: WO 2011/004555

(57) **Abstract**

A gas-fired superconductive electrically propelled ship is provided with a cargo tank 1 (fuel tank) for storage of LNG 2, a vaporized gas feed line 3 for feeding of vaporized gas 2' produced in the cargo tank 1 as fuel to dual-fuel engines (driving engines) 5 for generators 6, a gas heater 4 incorporated in the vaporized gas feed line 3 for heating of the vaporized gas 2', a propelling superconductive motor 7 driven with electric power produced by the generator 6, a heat pump 15 for cooling the superconductive motor 7 and maintaining low temperature of the motor and an LNG gasification line 26 for feeding of LNG 2 from the cargo tank 1 as cold source for compression radiation treatment in the heat pump 15 and for guiding of the vaporized gas 2' having treated to the cargo tank 1 and to the vaporized gas feed line 3 at entry-side of the gas heater 4.

## Description

### Technical Field

The present invention relates to a gas-fired superconductive electrically propelled ship.

### Background Art

Nowadays, as an LNG ship for transporting LNG (liquid natural gas), a gas-fired electrically propelled ship is in service in which boil-off gas from LNG as cargo is utilized as fuel for diesel generators to drive an electric motor by resultant electric power for propulsion. In order to attain a further high-efficiency electric propulsion system, researches have been made on development of a gas-fired superconductive electrically propelled ship using a superconductive motor.

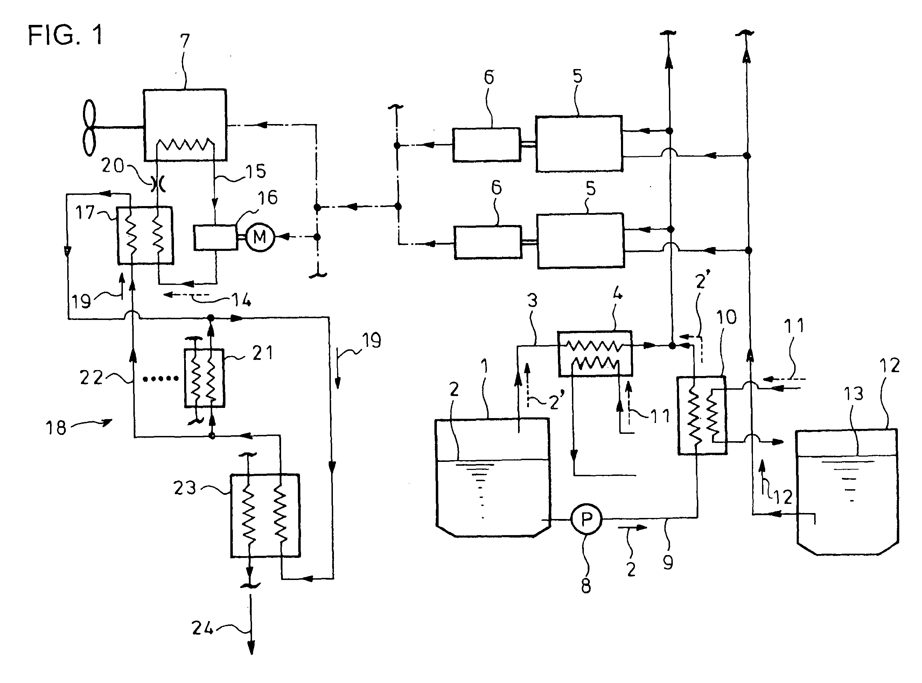

Fig. 1 shows an example of a conventionally proposed gas-fired superconductive electrically propelled ship comprising existent systems in combination. In Fig. 1, reference numeral 1 denotes a cargo tank 1 for storage of cargo which is LNG 2 (especially, a separate tank for fuel may be installed). Vaporized gas (boil-off gas) 2' generated in the cargo tank 1 is fed to dual-fuel engines 5 through a vaporized gas feed line 3 after heated by a gas heater 4; and the gas is used in the engines 5 as fuel to drive generators 6, resultant electric power being supplied to a propelling superconductive motor 7.

Furthermore, where necessary, part of the liquid phase LNG 2 stored in the cargo tank 1 may be pumped from a bottom of the tank through an LNG gasification line 9 with a pump 8 and vaporized through a vaporizer 10, resultant vaporized gas 2' being also fed as fuel to the engines 5 through joining to the vaporized gas feed line 3 at exit-side of the gas heater 4.

To the gas heater 4 and vaporizer 10, for example, vapor 11 from a boiler equipments or the like in the ship may be introduced and utilized as heat source. For example, at start-up where heat source is difficult to secure, heavy oil 13 from a heavy oil tank 12 may be appropriately guided as fuel to the engines 5.

On the other hand, the superconductive motor 7 is cooled to about -196°C by a heat pump 15 with helium as cooling medium 14. Specifically, the cooling medium 14 which is helium gas highly temperatured and highly pressured through compression by a compressor 16 is guided to a condenser 17 where it is cooled into helium liquid with medium temperature and high pressure through heat-exchange with clear water 19 from a clear-water central cooling system 18 referred to hereinafter. The helium liquid is expanded and vaporized by an expansion valve 20 just in front of the superconductive motor 7. Thus, cooling to a conditional temperature for superconductivity is managed through evaporative cooling of field and armature coils in the motor 7. The helium gas discharged from the superconductive motor 7 is returned to the compressor 16 for circulation.

In the example illustrated, clear water 19 from the clear-water central cooling system 18 is used as a cold source for the compression radiation treatment in the condenser 17 of the heat pump 15. The clear-water central cooling system 18 serves to cool various devices and equipments 21 in the ship by means of the clear water 19 circulated in a closed circuit 22. The clear water 19 having been warmed by its passing through the condenser 17 of the heat pump 15 and the devices and equipments 21 is cooled through heat exchange with seawater 24 from outboard in a clear water cooler 23 incorporated in the closed circuit 22.

As prior art literatures pertinent to the invention, there already exists, for example, the following Patent Literatures 1 and 2.

### Citation List

### Patent Literature

[Patent Literature 1] JP2005-186815A
[Patent Literature 2] JP2005-183440A

### Summary of Invention

### Technical Problems

However, in the conventionally proposed gas-fired superconductive electrically propelled ship comprising the existing systems in combination as shown in Fig. 1, heat obtained during the cooling process of the superconductive motor 7 is vainly discharged to the sea through heat exchange with the seawater. Moreover, heat for heating of the vaporized gas (boil-off gas) 2' generated in the cargo tank 1 by the gas heater 4 and for vaporization in the vaporizer 10 of the liquid phase LNG 2 taken out from the cargo tank 1 has to be secured by inboard facilities, disadvantageously resulting in deterioration of systems energy efficiency. Furthermore, a cooling system for the superconductive motor 7 and a heating system for vaporization of the LNG 2 are separately required, disadvantageously resulting in complex systems configuration and thus increase in installation cost.

The invention was made in view of the above and has its object to provide a gas-fired superconductive electrically propelled ship which has satisfactory systems energy efficiency and is inexpensive in installation cost.

### Solution to Problems

The invention is directed to a gas-fired superconductive electrically propelled ship comprising a fuel tank for storing LNG, a vaporized gas feed line for feeding as fuel of vaporized gas generated in said fuel tank to driving engines for generators, a gas heater incorporated in said vaporized gas feed line for heating the vaporized gas, a propelling superconductive motor driven with electric power generated by said generators, a heat pump for cooling said superconductive motor and maintaining low temperature thereof and an LNG gasification line for feeding of LNG from the fuel tank as cold source in compression radiation treatment in said heat pump and for guiding of the vaporized gas having treated to the fuel tank and to entry-side of the gas heater in said vaporized gas feed line.

Thus, in this way, LNG is fed from the fuel tank through the LNG gasification line to the heat pump and is utilized as cold source in compression radiation treatment in the heat pump, thus contributing to cooling of the superconductive motor. On the other hand, LNG itself is guided as vaporized gas to the fuel tank and to entry-side of the gas heater in the vaporized gas feed line, is heated by the gas heater together with the vaporized gas generated in the fuel tank and then is fed to the driving engines where it is used as fuel for generation of electric power by the generators, resultant electric power being supplied to a propelling superconductive motor for driving of the motor.

Further, in the invention, it is preferable that LNG gasification line has cooling lines in parallel with one another and passing respectively through various devices and equipments in the ship, which makes it possible to utilize exhaust heat from the devices and equipments effectively for gasification of LNG and which makes it possible to omit a part or all of the clear-water central cooling system to further reduce the installation cost.

Further, in the invention, the fuel tank may be a cargo tank, which makes it possible to utilize LNG as cargo as fuel of the driving engines for the generators. As a result, there is no need of providing a fuel tank separately from the cargo tank, leading to further reduction in installation cost.

### Advantageous Effects of Invention

According to the above-mentioned gas-fired superconductive electrically propelled ship of the invention, the flowing various excellent effects and advantages can be obtained.

(I) LNG in the fuel tank is utilized as cold source for cooling of the superconductive motor before it is fed as fuel to the driving engines for the generators, heat obtained during the cooling process of the superconductive motor being utilized for vaporization of LNG. As a result, systems energy efficiency can be substantially enhanced. Moreover, a system of cooling the superconductive motor and a system of vaporizing LNG are integrated into a single system, so that systems configuration can be simplified to substantially reduce the installation cost.
(II) When the LNG gasification line has the cooling lines in parallel with one another and passing respectively through the various devices and equipments in the ship, the exhaust heat from the devices and equipments can be effectively utilized for gasification of LNG and a part or all of the clear-water central cooling system can be omitted to further reduce the installation cost.
(III) When the fuel tank is a cargo tank, LNG as cargo can be used as fuel for the driving engines for the generators. A fuel tank may not be provided separately from the cargo tank, leading to further reduction in installation cost.

### Brief Description of Drawings

Fig. 1 is a systematic diagram showing a conventional example; and
Fig. 2 is a systematic diagram showing an embodiment of the invention.

### Description of Embodiment

An embodiment of the invention will be described in conjunction with the drawings.

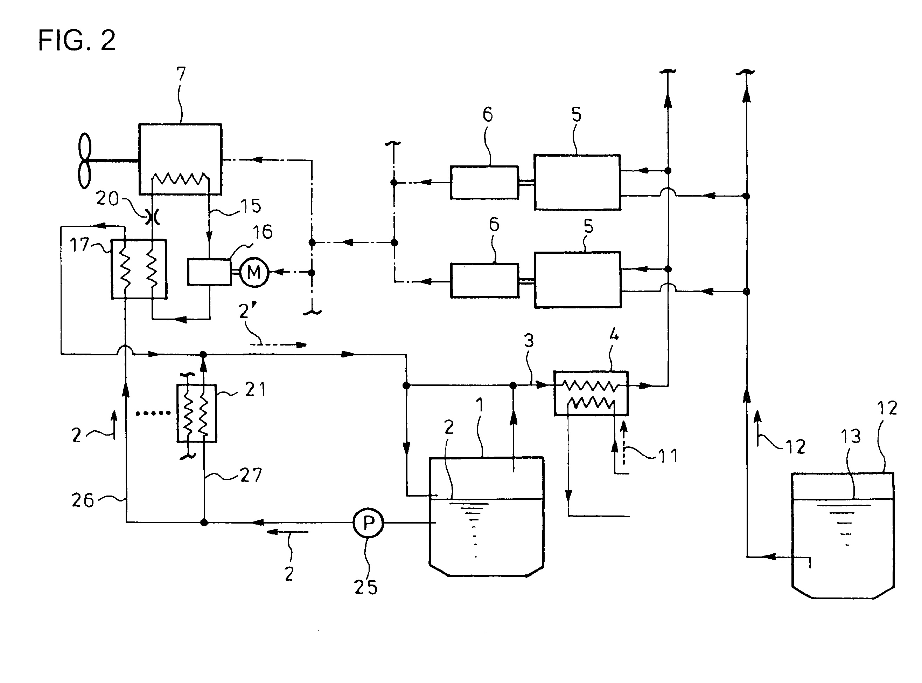

Fig. 2 is an embodiment of the invention in which parts similar to those in Fig. 1 are represented by the same reference numerals.

In the embodiment, in place of the clear water 19 (see Fig. 1) from the clear-water central cooling system 18 (see Fig. 1) which is used as cold source in the compression radiation treatment in the condenser 17 of the heat pump 15 in the previous Fig. 1, an LNG gasification line 26 is newly provided which is for feed of LNG 2 from the cargo tank 1 (fuel tank) through a pump 25 as cold source for the compression radiation treatment in the condenser 17 of the heat pump 15, and the vaporized gas 2' having treated is guided to the cargo tank 1 and to entry-side of the gas heater 4 in the vaporized gas feed line 3 while the LNG gasification line 9 (see Fig. 1) employed in the systematic configuration in Fig. 1 for joining LNG 2 in the cargo tank 1 as the vaporized gas 2' through the vaporizer 10 (see Fig. 1) to exit-side of the gas heater 4 in the vaporized gas feed line 3 is abolished.

Further, specifically in the embodiment, the LNG gasification line 26 has cooling lines 27 which are in parallel with one another and pass respectively through various devices and equipments 21 in the ship, LNG 2 passing through the respective cooling lines 27 cooling the devices and equipments 21. Such cooling of the devices and equipments 21 also facilitates vaporization of LNG 2.

In the gas-fired superconductive electrically propelled ship thus constructed, LNG 2 is fed from the cargo tank 1 through the LNG gasification line 26 to the heat pump 15 and is utilized as cold source for the compression radiation treatment in the heat pump 15, thus contributing to cooling of the superconductive motor 7.
On the other hand, LNG 2 itself is guided as vaporized gas 2' to the cargo tank 1 and to entry-side of the gas heater 3 in the vaporized gas feed line 3, is heated by the gas heater 4 together with the vaporized gas 2' generated in the cargo tank 1 and then is fed to the dual-fuel engines 5 (driving engines for the generators 6) where it is used as fuel for generation of electric power by the generator 6, resultant electric power being supplied to a propelling superconductive motor 7 for driving of the motor 7.

Incidentally, the vaporized gas 2' guided through the LNG gasification line 26 to the entry-side of the gas heater 4 in the vaporized gas feed line 3 has relatively elevated temperature due to the heat obtained during the cooling process of the superconductive motor 7, so that a required amount of heat source to be charged for heat exchange in the gas heater 4 is less than that required as in the case of Fig. 1 for temperature elevation of only the vaporized gas (boil-off gas) 2' generated in the cargo tank 1.

According to the gas-fired superconductive electrically propelled ship as mentioned in the above, LNG 2 in the cargo tank 1 is utilized as cold source for cooling of the superconductive motor 7 before it is fed as fuel to the dual-fuel engines 5 for the generators 6, the heat obtained during the cooling process of the superconductive motor 7 being utilized for vaporization of LNG 2. As a result, systems energy efficiency can be substantially enhanced. Moreover, a system of cooling the superconductive motor 7 and a system of vaporizing LNG 2 are integrated into a single system, so that systems configuration can be simplified to substantially reduce the installation cost.

Moreover, especially in the embodiment, the LNG gasification line 26 has cooling lines 27 in parallel with one another and passing respectively through the various devices and equipments 21 in the ship, so that exhaust heat from the devices and equipments 21 can be effectively utilized for gasification of LNG 2 and a part or all of the clear-water central cooling system can be omitted to further reduce the installation cost.

Further, in the embodiment, the cargo tank 1 for storage of LNG 2 as cargo is the fuel tank, so that LNG 2 as cargo can be utilized as fuel for the dual-fuel engines 5 for the generators 6, which makes it unwanted to provide a fuel tank separately from the cargo tank 1, leading to further reduction in installation cost.

It is to be understood that a gas-fired superconductive electrically propelled ship of the invention is not limited to the above embodiment and that various changes and modifications may be made without departing from the scope of the invention. For example, though the embodiment illustrated exemplifies a case where the fuel tank is the cargo tank, the fuel tank may be installed separately from the cargo tank. The cooling medium for the heat pump is not necessarily restricted to helium.

### Reference Signs List

- 1: cargo tank (fuel tank)
- 2: LNG
- 2': vaporized gas
- 3: vaporized gas feed line
- 4: gas heater
- 5: dual-fuel engine (driving engine)
- 6: generator
- 7: superconductive motor
- 15: heat pump
- 21: various devices and equipments
- 26: LNG gasification line
- 27: cooling line

## Claims

1. A gas-fired superconductive electrically propelled ship comprising a fuel tank for storing LNG, a vaporized gas feed line for feeding as fuel of vaporized gas generated in said fuel tank to driving engines for generators, a gas heater incorporated in said vaporized gas feed line for heating the vaporized gas, a propelling superconductive motor driven with electric power generated by said generators, a heat pump for cooling said superconductive motor and maintaining low temperature thereof and an LNG gasification line for feeding of LNG from the fuel tank as cold source in compression radiation treatment in said heat pump and for guiding of the vaporized gas having treated to the fuel tank and to entry-side of the gas heater in said vaporized gas feed line.

2. The gas-fired superconductive electrically propelled ship as claimed in claim 1, wherein the LNG gasification line has cooling lines in parallel with one another and passing respectively through various devices and equipments in the ship.

3. The gas-fired superconductive electrically propelled ship as claimed in claim 1, wherein the fuel tank is a cargo tank.

4. The gas-fired superconductive electrically propelled ship as claimed in claim 2, wherein the fuel tank is a cargo tank.
